# EUROPEAN PATENT APPLICATION

(11) **EP 4 024 808 A1**
(43) Date of publication of application: **06.07.2022**
(21) Application number: 20889692.8
(22) Date of filing: 07.06.2020
(51) Int. Cl.: H04L 29/06, G06F 9/50

(54) **TIME DELAY GUARANTEE METHOD, SYSTEM AND APPARATUS, AND COMPUTING DEVICE AND STORAGE MEDIUM**

(30) Priority: 20.11.2019 CN 201911143062; 27.05.2020 CN 202010463488
(71) Applicant: Huawei Cloud Computing Technologies Co., Ltd., Guizhou 550025 (CN)
(72) Inventor: XIAO, Lei, Shenzhen, Guangdong 518129 (CN); SUN, Keyong, Shenzhen, Guangdong 518129 (CN); SUN, Hongwei, Shenzhen, Guangdong 518129 (CN)
(74) Representative: Maiwald Patent- und Rechtsanwaltsgesellschaft mbH
(86) International application number: PCT/CN2020/094794
(87) International publication number: WO 2021/098190

(57) **Abstract**

A latency assurance method is disclosed, and relates to the field of cloud computing technologies. The method is applied to a cloud platform, and the cloud platform includes a service provision system and a latency assurance system. The service provision system includes a service created for a user according to a service requirement of the user. The latency assurance system is configured to provide a latency assurance cloud service for the user. The latency assurance cloud service is used to provide latency assurance for the service of the user in the service provision system. The method includes: The latency assurance system obtains a latency requirement parameter configured by the user in a configuration interface, where the latency requirement parameter includes information about the service of the user and a latency requirement that the service of the user needs to meet. The latency assurance system provides latency assurance for the service of the user according to the latency requirement that the service of the user needs to meet. Therefore, the latency assurance cloud service can be provided for the user in the foregoing manner, to provide latency assurance for the service deployed for the user on the cloud platform.

## Description

### TECHNICAL FIELD

This application relates to the field of cloud computing technologies, and in particular, to a latency assurance method, system, and apparatus, a computing device, and a storage medium.

### BACKGROUND

As cloud service technologies rapidly develop, more services can be implemented on a cloud platform. Many of these services have a high requirement on a latency, and an excessively long latency seriously affects quality of service. For example, user experience of using a service on an application is greatly affected when a latency between the application and a database is long.

However, latency assurance cannot be effectively implemented for a service of a user on an existing cloud platform.

### SUMMARY

This application provides a latency assurance method, system, and apparatus, a computing device, and a storage medium, to provide a latency assurance cloud service for a user.

According to a first aspect, this application provides a latency assurance method. The latency assurance method is applied to a cloud platform. The cloud platform includes a service provision system and a latency assurance system. The service provision system includes a service created for a user according to a service requirement of the user. The latency assurance system is configured to provide a latency assurance cloud service for the user. The latency assurance cloud service is used to provide latency assurance for the service of the user in the service provision system. In addition, the latency assurance cloud service may be an independent cloud service among cloud services provided by the cloud platform. In other words, the user can purchase the latency assurance cloud service as an independent service.

The latency assurance method includes: The latency assurance system obtains a latency requirement parameter configured by the user in a configuration interface, where the latency requirement parameter includes information about the service of the user and a latency requirement that the service of the user needs to meet. The latency assurance system determines, based on the information about the service of the user, the service of the user in the service provision system. The latency assurance system provides latency assurance for the service of the user according to the latency requirement that the service of the user needs to meet.

In the latency assurance method provided in this application, the latency assurance system obtains the latency requirement parameter configured by the user in the configuration interface, and provides latency assurance for the service of the user based on the latency requirement parameter. The latency assurance cloud service is provided to the user as an independent cloud service. This improves flexibility of purchasing and using the latency assurance cloud service, and improves user experience.

In a possible implementation, personalized customization may be performed on the latency assurance cloud service. This further improves quality of service. Correspondingly, the latency requirement parameter may further include an optional parameter used to implement personalized customization. For example, the latency requirement parameter may further include one or more of the following information: information about a resource used to provide latency assurance, information about time used to provide latency assurance, forcible information for providing latency assurance, a preference formulation policy used to provide latency assurance, and a collection period of latency information of the service of the user.

In a possible implementation, the providing latency assurance for the service of the user includes: providing latency assurance for the service of the user based on the latency requirement parameter.

Correspondingly, the providing latency assurance for the service of the user based on the latency requirement parameter includes: obtaining the latency information of the service of the user, where the latency information is used to reflect an actual latency of the service of the user; and when the actual latency determined based on the latency information does not meet the latency requirement, adjusting, based on the latency information and the latency requirement, a resource used for the service of the user.

The latency information may include any one of the following: a transmission latency and/or a processing latency of a service packet, an actual latency of a service packet determined based on the transmission latency and/or the processing latency, and information about a latency difference between the actual latency and the latency requirement determined based on the actual latency and the latency requirement.

In addition, a manner of obtaining the latency information may be adjusted according to an application requirement. For example, the latency information may be obtained in a default obtaining manner, or the latency information may be obtained in an obtaining manner configured by the user. Before the latency information of the service of the user is obtained in the obtaining manner configured by the user, the latency assurance method further includes: obtaining a collection requirement parameter of the service, where the collection requirement parameter is used to indicate a collection requirement that needs to be met for obtaining the latency information. Correspondingly, the obtaining latency information of the service of the user includes: obtaining the latency information of the service of the user based on the collection requirement parameter.

In a possible implementation, the adjusting a resource used for the service of the user includes: adjusting one or more of a network resource, a computing resource, and a storage resource used for the service of the user.

Specifically, the adjusting a resource used for the service of the user includes: reserving the resource for the service of the user; or adjusting a restriction of the resource that can be used for the service of the user.

For example, the adjusting the restriction of the resource that can be used for the service of the user includes one or more of the following manners: adjusting a bandwidth limit for a port of a service object implementing the service of the user, adjusting a quality of service policy for the port of the service object, adjusting a priority of traffic used for the service of the user, adjusting a configuration of a network adapter used to transmit a service packet for the service of the user, or adjusting a deployment location of the service object.

Optionally, the obtaining the latency information of the service of the user includes: obtaining a transmission latency and/or a processing latency of the service packet for the service of the user; and obtaining the latency information based on the transmission latency and/or the processing latency.

According to a second aspect, this application provides a latency assurance method. The latency assurance method is applied to a cloud platform. The latency assurance method includes: obtaining a latency requirement parameter configured by a user in a configuration interface, where the latency requirement parameter includes information about a service of the user and a latency requirement that the service of the user needs to meet; and providing latency assurance for the service of the user based on the latency requirement parameter.

In the latency assurance method provided in this application, the latency requirement parameter configured by the user in the configuration interface is obtained, and latency assurance is provided for the service of the user based on the latency requirement parameter, so that latency assurance is provided for the service of the user on the cloud platform, and a running latency of the service on the cloud platform can meet the service requirement of the user.

Personalized customization may be performed on the latency assurance cloud service. This further improves quality of service. Correspondingly, the latency requirement parameter may further include an optional parameter used to implement personalized customization. For example, the latency requirement parameter may further include one or more of the following information: information about a resource used to provide latency assurance, information about time used to provide latency assurance, forcible information for providing latency assurance, a collection period of latency information of the service of the user, and a preference formulation policy used to provide latency assurance.

In a possible implementation, the providing latency assurance for the service of the user based on the latency requirement parameter includes: obtaining the latency information of the service of the user, where the latency information is used to reflect an actual latency of the service of the user; and when the actual latency determined based on the latency information does not meet the latency requirement, adjusting, based on the latency information and the latency requirement, a resource used for the service of the user.

The latency information may include any one of the following: a transmission latency and/or a processing latency of a service packet, an actual latency of a service packet determined based on the transmission latency and/or the processing latency, and information about a latency difference between the actual latency and the latency requirement determined based on the actual latency and the latency requirement.

In addition, a manner of obtaining the latency information may be adjusted according to an application requirement. For example, the latency information may be obtained in a default obtaining manner, or the latency information may be obtained in an obtaining manner configured by the user. Before the latency information of the service of the user is obtained in the obtaining manner configured by the user, the latency assurance method further includes: obtaining a collection requirement parameter of the service, where the collection requirement parameter is used to indicate a collection requirement that needs to be met for obtaining the latency information. Correspondingly, the obtaining latency information of the service of the user includes: obtaining the latency information of the service of the user based on the collection requirement parameter.

In a possible implementation, the adjusting a resource used for the service of the user includes: adjusting one or more of a network resource, a computing resource, and a storage resource used for the service of the user.

Specifically, the adjusting a resource used for the service of the user includes: reserving the resource for the service of the user; or adjusting a restriction of the resource that can be used for the service of the user.

For example, the adjusting the restriction of the resource that can be used for the service of the user includes one or more of the following manners: adjusting a bandwidth limit for a port of a service object implementing the service of the user, adjusting a quality of service policy for the port of the service object, adjusting a priority of traffic used for the service of the user, adjusting a configuration of a network adapter used to transmit a service packet for the service of the user, or adjusting a deployment location of the service object.

Optionally, the obtaining the latency information of the service of the user includes: obtaining a transmission latency and/or a processing latency of the service packet for the service of the user; and obtaining the latency information based on the transmission latency and/or the processing latency.

According to a third aspect, this application provides a latency assurance system. The latency assurance system is applied to a cloud platform. The cloud platform further includes a service provision system. The service provision system includes a service created for a user according to a service requirement of the user. The latency assurance system is configured to provide a latency assurance cloud service for the user. The latency assurance cloud service is used to provide latency assurance for the service of the user in the service provision system.

The latency assurance system includes: an obtaining module, configured to obtain a latency requirement parameter configured by the user in a configuration interface, where the latency requirement parameter includes information about the service of the user and a latency requirement that the service of the user needs to meet; and an execution module, configured to: determine, based on the information about the service of the user, the service of the user in the service provision system; and provide latency assurance for the service of the user according to the latency requirement that the service of the user needs to meet.

Optionally, the latency requirement parameter may further include one or more of the following information: information about a resource used to provide latency assurance, information about time used to provide latency assurance, forcible information for providing latency assurance, a preference formulation policy used to provide latency assurance, and a collection period of latency information of the service of the user.

Correspondingly, the execution module is specifically configured to provide latency assurance for the service of the user based on the latency requirement parameter.

Optionally, the execution module is specifically configured to: obtain latency information of the service of the user, where the latency information is used to reflect an actual latency of the service of the user; and when the actual latency determined based on the latency information does not meet the latency requirement, adjust, based on the latency information and the latency requirement, a resource used for the service of the user.

Optionally, the execution module is specifically configured to: adjust one or more of a network resource, a computing resource, and a storage resource used for the service of the user.

Optionally, the execution module is specifically configured to: reserve the resource for the service of the user; or adjust a restriction of the resource that can be used for the service of the user.

According to a fourth aspect, this application provides a latency assurance apparatus. The latency assurance apparatus is deployed on a cloud platform. The latency assurance apparatus includes: an obtaining module, configured to obtain a latency requirement parameter configured by a user in a configuration interface, where the latency requirement parameter includes information about a service of the user and a latency requirement that the service of the user needs to meet; and a processing module, configured to provide latency assurance for the service of the user based on the latency requirement parameter.

Optionally, the latency assurance apparatus further includes: a creation module, configured to create the service of the user based on a service requirement of the user, and complete creation of the service of the user before the latency requirement parameter is obtained.

Optionally, the latency requirement parameter may further include one or more of the following information: information about a resource used to provide latency assurance, information about time used to provide latency assurance, forcible information for providing latency assurance, a preference formulation policy used to provide latency assurance, and a collection period of latency information of the service of the user.

Optionally, the processing module includes: an obtaining submodule, configured to obtain latency information of the service of the user, where the latency information is used to reflect an actual latency of the service of the user; and an adjustment submodule, configured to: when the actual latency determined based on the latency information does not meet the latency requirement, adjust, based on the latency information and the latency requirement, a resource used for the service of the user.

Optionally, the adjustment submodule is specifically configured to: adjust one or more of a network resource, a computing resource, and a storage resource used for the service of the user.

Optionally, the adjustment submodule is specifically configured to: reserve the resource for the service of the user; or adjust a restriction of the resource that can be used for the service of the user.

Optionally, the adjusting the restriction of the resource that can be used for the service of the user includes one or more of the following manners: adjusting a bandwidth limit for a port of a service object implementing the service of the user, adjusting a quality of service policy for the port of the service object, adjusting a priority of traffic used for the service of the user, adjusting a multi-queue configuration of a network adapter used to transmit a service packet for the service of the user, or adjusting a deployment location of the service object.

Optionally, the obtaining submodule is specifically configured to: obtain a transmission latency and/or a processing latency of the service packet for the service of the user; and obtain the latency information based on the transmission latency and/or the processing latency.

According to a fifth aspect, this application provides a computing device. The computing device includes a processor and a memory. The memory stores a computer program. When the processor executes the computer program, the computing device performs the method provided in the first aspect or the second aspect.

According to a sixth aspect, this application provides a computer-readable storage medium. The computer-readable storage medium may be a non-transitory readable storage medium. When instructions in the computer-readable storage medium are executed by a computer, the computer performs the method provided in the first aspect or the second aspect. The storage medium includes but is not limited to a volatile memory, for example, a random access memory, or a nonvolatile memory, such as a flash memory, a hard disk drive (hard disk drive, HDD), and a solid-state drive (solid-state drive, SSD).

According to a seventh aspect, this application provides a computer program product. The computer program product includes computer instructions. When the computer program product is executed by a computing device, the computing device performs the latency assurance method provided in the first aspect or the second aspect. The computer program product may be a software installation package. When the latency assurance method in the first aspect or the second aspect needs to be used, the computer program product may be downloaded and executed on the computing device.

### BRIEF DESCRIPTION OF DRAWINGS

To describe the technical methods in embodiments of this application more clearly, the following briefly describes the accompanying drawings for the embodiments.
FIG. 1 is a schematic diagram of deployment of a latency assurance system related to a latency assurance method according to an embodiment of this application;
FIG. 2 is a schematic diagram of a structure of a latency assurance system according to an embodiment of this application;
FIG. 3 is a schematic diagram of a structure of another latency assurance system according to an embodiment of this application;
FIG. 4 is a schematic diagram of a structure of still another latency assurance system according to an embodiment of this application;
FIG. 5 is a schematic diagram of deployment of another latency assurance system according to an embodiment of this application;
FIG. 6 is a schematic diagram of deployment of still another latency assurance system according to an embodiment of this application;
FIG. 7 is a flowchart of a latency assurance method according to an embodiment of this application;
FIG. 8 is a schematic diagram of a configuration interface according to an embodiment of this application;
FIG. 9 is a schematic diagram of another configuration interface according to an embodiment of this application;
FIG. 10 is a flowchart of a method for providing latency assurance for a service based on a latency requirement parameter according to an embodiment of this application;
FIG. 11 is a schematic diagram of a structure of a latency assurance apparatus according to an embodiment of this application;
FIG. 12 is a schematic diagram of a structure of another latency assurance apparatus according to an embodiment of this application;
FIG. 13 is a schematic diagram of a structure of a processing module according to an embodiment of this application; and
FIG. 14 is a schematic diagram of a structure of a computing device according to an embodiment of this application.

### DESCRIPTION OF EMBODIMENTS

The following describes the solutions in embodiments provided in this application with reference to the accompanying drawings in this application.

An embodiment of this application provides a latency assurance method. In the latency assurance method, a latency assurance system may obtain a latency requirement parameter configured by a user in a configuration interface, and provide latency assurance for a service of the user according to a latency requirement that the service of the user needs to meet. Latency assurance is provided for the service of the user deployed for the user on a cloud platform, so that user experience can be improved. The service of the user in this application includes a software application service created on the cloud platform according to a service requirement of the user, for example, a language recognition service or a video review service. In addition, the service of the user may further include a compute instance, a storage instance, or the like created on the cloud platform according to the service requirement of the user, for example, a virtual machine, a virtual machine cluster, a container, a storage resource, or a database resource.

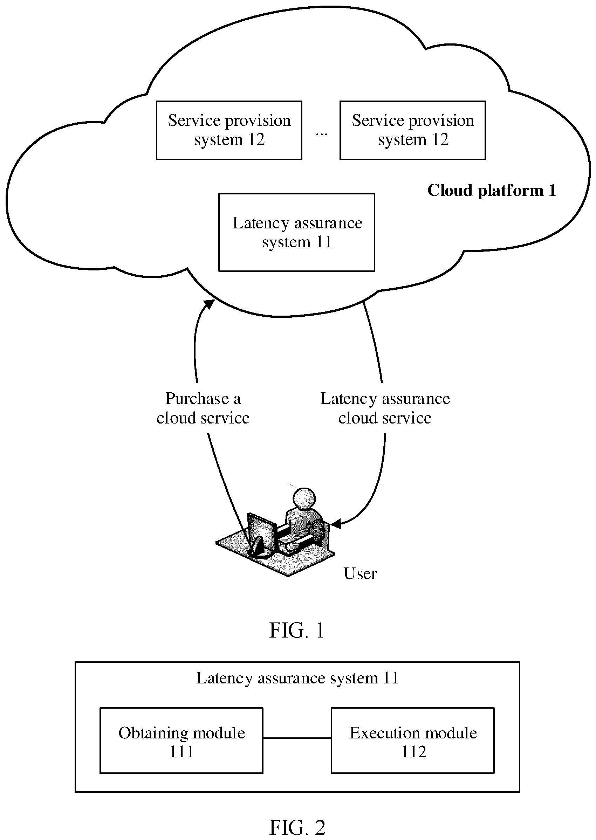

FIG. 1 is a schematic diagram of deployment of a latency assurance system related to a latency assurance method according to an embodiment of this application. As shown in FIG. 1, the latency assurance system 11 is deployed on a cloud platform 1. A large quantity of basic resources owned by a cloud service provider are deployed on the cloud platform 1. For example, computing resources, storage resources, and network resources are deployed on the cloud platform 1, and the computing resources may be a large quantity of computing devices (for example, servers). The latency assurance system 11 may implement, by using the basic resource deployed on the cloud platform 1, a latency assurance method provided in the embodiments of this application, to provide latency assurance for a service of a user.

It should be understood that the latency assurance system 11 may be a hardware system or a software system deployed on a hardware device and/or a virtual machine, and the latency assurance system 11 may alternatively be implemented by using a combination of hardware and software. When the latency assurance system 11 is the hardware system, the latency assurance system 11 may be a set of computing devices. When the latency assurance system 11 is the software system, the latency assurance system 11 may be independently deployed on a server or a virtual machine on the cloud platform 1, the latency assurance system 11 may be deployed in a distributed manner on a plurality of servers on the cloud platform 1, the latency assurance system 11 may be deployed in a distributed manner on a plurality of virtual machines on the cloud platform 1, or the latency assurance system 11 may be deployed in a distributed manner on a server and a virtual machine on the cloud platform 1.

As shown in FIG. 1, service provision systems 12 may be further deployed on the cloud platform 1. The service provision system 12 is configured to provide a cloud service for a user by using the basic resource deployed on the cloud platform 1, for example, provide an application service or a database service for the user. Correspondingly, the latency assurance system 11 is configured to provide latency assurance for the service of the user provided by the service provision system 12. It should be understood that the service provision system 12 may also be a hardware system or a software system deployed on a hardware device and/or a virtual machine, and the service provision system 12 may alternatively be implemented by using a combination of hardware and software.

As shown in FIG. 1, the latency assurance system 11 can be abstracted by the cloud service provider into a latency assurance cloud service on the cloud platform 1 and provided to the user. After the user purchases the latency assurance cloud service on the cloud platform 1, the cloud platform 1 can provide the latency assurance cloud service for the user by using the latency assurance system 11 deployed on the cloud platform 1. A manner of purchasing the latency assurance cloud service may include: performing pre-charging and then performing settlement based on actual usage of a final resource, or performing settlement according to time in which the latency assurance cloud service is provided.

It should be noted that, in this embodiment of this application, the cloud platform 1 may be a cloud platform of a center cloud, a cloud platform of an edge cloud, or a cloud platform of both a center cloud and an edge cloud. This is not specifically limited in this embodiment of this application. In addition, when the cloud platform 1 is the cloud platform of both the center cloud and the edge cloud, the latency assurance system 11 may be partially deployed on a cloud platform of the edge cloud, and partially deployed on a cloud platform of the center cloud.

It should be understood that the latency assurance cloud service may be an independent cloud service among cloud services provided by the cloud platform. In other words, the user can purchase the latency assurance cloud service on the cloud platform as an independent service. When the latency assurance cloud service is the independent cloud service, dependence of the latency assurance cloud service on the service can be reduced, and flexibility of purchasing and using the latency assurance cloud service can be improved. For example, after the user purchases the latency assurance cloud service, latency assurance is configured simultaneously on one or more services that have been deployed and run on the cloud platform, so that latency assurance is implemented in subsequent running of the one or more services.

Alternatively, a function of the latency assurance cloud service and the service created for the user according to a service requirement of the user may be integrated into one cloud service that provides the service. When the latency assurance cloud service and the service are integrated into one cloud service, creating the service for the user according to the service requirement of the user is a basic function of the cloud service that provides the service, and the latency assurance cloud service may be an optional function of the cloud service that provides the service. That is, after purchasing the cloud service that provides the service, the user may select to enable the basic function of creating the service for the user according to the service requirement of the user, and may select, according to a requirement of the user, whether to configure latency assurance for the service. Prices at which the user purchases the cloud service that provides the service may be different based on different selections.

FIG. 2 is a schematic diagram of a structure of a latency assurance system according to an embodiment of this application. The latency assurance system 11 is configured to implement a latency assurance method provided in the embodiments of this application. The latency assurance system 11 may include an obtaining module 111 and an execution module 112. A communication connection is established between the obtaining module 111 and the execution module 112. In a possible implementation, the communication connection between the modules may be a network connection, or the communication connection between the modules may be implemented through invoking an application programming interface (application programming interface, API) or the like.

The obtaining module 111 is configured to obtain a latency requirement parameter configured by a user in a configuration interface for a service of the user, and send the latency requirement parameter to the execution module 112. The latency requirement parameter includes information about the service of the user and a latency requirement that the service of the user needs to meet. The execution module 112 is configured to: determine, based on the information about the service of the user, the service of the user in a service provision system; and provide latency assurance for the service of the user according to the latency requirement that the service of the user needs to meet. The latency requirement parameter includes the information about the service of the user and the latency requirement that the service of the user needs to meet.

For ease of understanding, the following uses an example to describe a process in which the obtaining module 111 cooperates with the execution module 112 to implement the latency assurance method. It is assumed that the latency requirement parameter obtained by the obtaining module 111 is that a latency between two virtual machines (virtual machine, VM) used to implement a service A is required not to exceed 1 millisecond (ms) from 5:00 p.m. to 8:00 p.m. every day. After receiving the latency requirement parameter sent by the obtaining module 111, the execution module 112 may formulate the following latency assurance policy based on the latency requirement parameter: respectively deploying the two virtual machines on a server A and a server B, and setting bandwidth limits for ports of the two virtual machines to C megabits per second (Mbps), to provide latency assurance for the service A.

Optionally, the latency requirement parameter may further include one or more of the following information: information about a resource used to provide latency assurance, information about time used to provide latency assurance, forcible information for providing latency assurance, a preference formulation policy used to provide latency assurance, and a collection period of latency information of the service of the user.

In a possible implementation, the configuration interface may be a graphical user interface (graphical user interface, GUI). For example, a cloud platform may provide a graphical user interface for a user who purchases a service. The user may log on to the graphical user interface on a terminal device, and configure the latency requirement parameter for the service of the user in the graphical user interface. The terminal device may send the latency requirement parameter configured by the user to the obtaining module 111, so that the obtaining module 111 obtains the latency requirement parameter configured by the user in the graphical user interface.

In another possible implementation, the obtaining module 111 may indirectly obtain, in a transmission manner, for example, through an API, the latency requirement parameter configured by the user in the configuration interface. For example, another module on a cloud platform 1 may obtain, in advance, the latency requirement parameter configured by the user in the configuration interface, and the obtaining module 111 may receive, in a transmission manner, for example, through an API, the latency requirement parameter sent by the another module.

Optionally, the execution module 112 may further obtain latency information of the service of the user; and when an actual latency of the service of the user that is determined based on the latency information does not meet the latency requirement, the execution module 112 may adjust, based on the latency information and the latency requirement, a resource used for the service of the user, to provide latency assurance for the service of the user. The latency information is used to reflect the actual latency of the service of the user.

Optionally, a resource object that is used for the service of the user and that is to be adjusted by the execution module 112 may be one or more of a network resource, a computing resource, and a storage resource used for the service of the user. Optionally, a manner in which the execution module 112 adjusts the resource used for the service of the user may be reserving the resource for the service of the user; or adjusting a restriction of the resource that can be used for the service of the user.

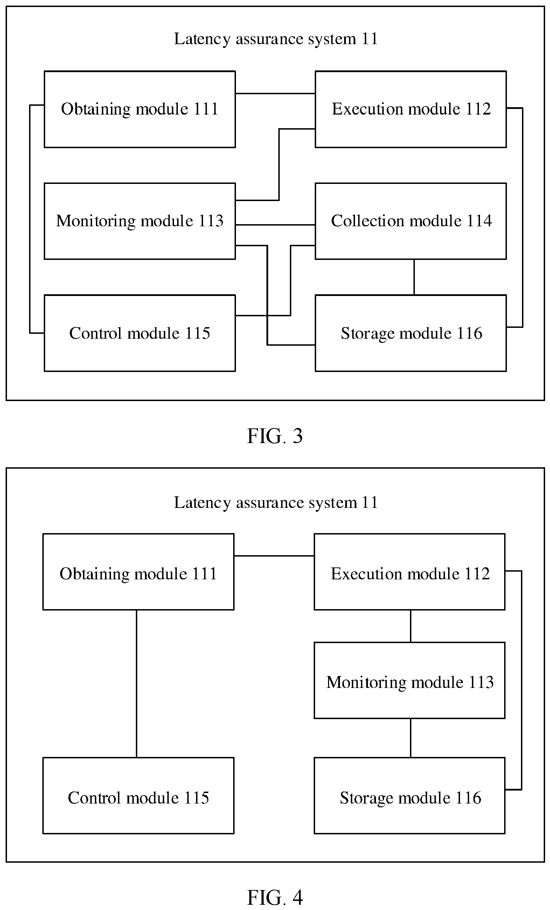

In a possible implementation of obtaining the latency information, as shown in FIG. 3, the latency assurance system 11 may further include a monitoring module 113. A communication connection is established between the monitoring module 113 and the execution module 112. The monitoring module 113 may obtain the latency information of the service of the user based on an execution status of the service of the user, and send the latency information of the service of the user to the execution module 112, so that the execution module 112 obtains the latency information.

Further, as shown in FIG. 3, the latency assurance system may further include a collection module 114. The monitoring module 113 may obtain the execution status of the service of the user by using the collection module 114, and obtain the latency information based on the execution status. Correspondingly, a communication connection is established between the collection module 114 and the monitoring module 113. The collection module 114 is configured to obtain the execution status of the service of the user, and send the execution status to the monitoring module 113. The execution status of the service of the user may be represented by a transmission latency and/or a processing latency of a service packet used to implement the service.

In a possible implementation, the collection module may be implemented by using dedicated hardware. The dedicated hardware is configured to obtain the execution status of the service of the user. The dedicated hardware may be deployed on the cloud platform. For example, the dedicated hardware may be deployed in a device or module that runs or manages the service of the user (for example, deployed in a network element for transmitting the service packet). The dedicated hardware is configured to obtain the service packet transmitted by the network element, and determine the execution status of the service of the user based on the service packet. In addition, when the dedicated hardware is deployed in the network element for implementing the service of the user, impact caused by deployment of the dedicated hardware to the actual latency of the service of the user can be reduced.

Alternatively, the latency assurance system may not include a collection module. In this case, the monitoring module 113 may obtain the execution status of the service from a device or module that runs or manages the service of the user. In this case, a schematic diagram of a structure of the latency assurance system 11 is shown in FIG. 4. For example, the monitoring module 113 may obtain the execution status of the service from the network element for transmitting the service packet for the service or a software module deployed in the network element. In a possible implementation, the network element for transmitting the service packet may be a virtual switch (virtual switch) for transmitting the service packet, and the software module in the network element may be a software module in the virtual switch.

Optionally, as shown in FIG. 3 and FIG. 4, the latency assurance system 11 may further include a control module 115. A communication connection is established between the control module 115 and the collection module. The control module 115 is configured to indicate the collection module to obtain the transmission latency and/or the processing latency of the service packet.

In a possible implementation, the latency requirement parameter may further include information used to indicate a requirement such as a collection period of the latency information. In this case, a communication connection may also be established between the control module 115 and the obtaining module 111. The obtaining module 111 may send the latency requirement parameter to the control module 115, so that the control module 115 indicates, based on the latency requirement parameter, the collection module to obtain a transmission status of the service of the user. In addition, when the latency assurance system 11 includes a plurality of collection modules, the control module 115 may indicate, based on an application requirement or the latency requirement parameter, some or all of the plurality of collection modules to obtain the transmission status of the service of the user.

As shown in FIG. 3, the latency assurance system 11 may further include a storage module 116. Communication connections may be established between the storage module 116 and the collection module and between the storage module 116 and the monitoring module 113. The storage module 116 is configured to store information that indicates the transmission status of the service of the user and that is obtained by the collection module. Correspondingly, the monitoring module 113 is configured to obtain, from the storage module 116, the information that indicates the transmission status of the service of the user, and obtain the latency information based on the information that indicates the transmission status.

Optionally, a communication connection may also be established between the storage module 116 and the execution module 112. After obtaining the latency information, the monitoring module 113 may further store the latency information in the storage module 116, so that the execution module 112 obtains the latency information from the storage module 116.

It should be understood that division of the latency assurance system 11 into the modules shown in FIG. 2 to FIG. 4 is merely example division performed based on functions.

A deployment manner of the latency assurance system 11 provided in the embodiments of this application is flexible. In a deployment manner, the latency assurance system 11 provided in the embodiments of this application may alternatively be deployed in a distributed manner in different environments. The latency assurance system 11 may be logically divided into a plurality of parts, and each part has a different function. The plurality of parts may be deployed in a distributed manner in different environments. The plurality of parts deployed in the different environments cooperate to implement the latency assurance method provided in the embodiments of this application.

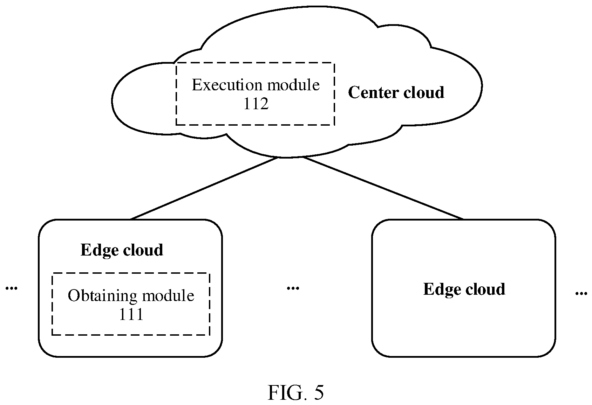

For example, when a cloud platform 1 is a cloud platform of both a center cloud and an edge cloud, the latency assurance system 11 may be logically divided into two parts, where one part is deployed on the edge cloud, and the other part is deployed on the center cloud. For example, as shown in FIG. 5, a latency assurance system 11 may be logically divided into an obtaining module 111 and an execution module 112. In a scenario, the obtaining module 111 is deployed on an edge cloud, and the execution module 112 is deployed on a center cloud. The obtaining module 111 deployed on the edge cloud may obtain a latency requirement parameter configured by a user in a configuration interface, send the latency requirement parameter to the execution module 112 deployed on the center cloud. The execution module 112 is configured to provide latency assurance for a service of the user based on the latency requirement parameter.

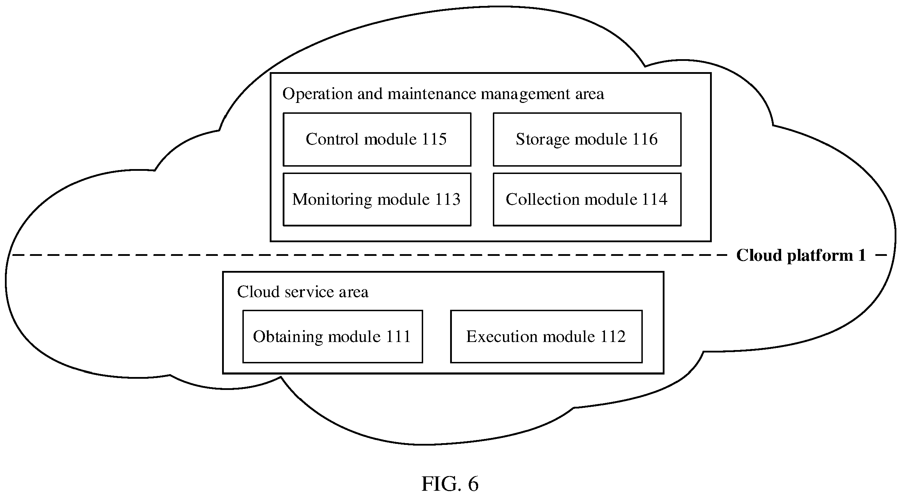

For another example, as shown in FIG. 6, a latency assurance system 11 may be logically divided into an obtaining module 111, an execution module 112, a monitoring module 113, a collection module 114, a control module 115, and a storage module 116. In a scenario, a cloud platform includes a cloud service area and an operation and maintenance management area. The obtaining module 111 and the execution module 112 are deployed in the cloud service area of the cloud platform. The monitoring module 113, the collection module 114, the control module 115, and the storage module 116 are deployed in the operation and maintenance management area of the cloud platform. In this case, the obtaining module 111 obtains a latency requirement parameter configured by a user in a configuration interface, and sends the latency requirement parameter to the execution module 112 and the control module 115. The control module 115 indicates, based on the latency requirement parameter, the collection module 114 to collect an execution status of a service of the user. After obtaining the execution status, the collection module 114 stores, in the storage module 116, information that indicates the execution status. Then, the monitoring module 113 obtains the execution status from the storage module 116, obtains latency information based on the execution status, and then stores the latency information in the storage module 116. The execution module 112 obtains the latency information from the storage module 116, and determines, based on the latency information and the latency requirement parameter, whether an actual latency of the service of the user meets a latency requirement indicated by the latency requirement parameter. When determining that the actual latency of the service of the user does not meet the latency requirement indicated by the latency requirement parameter, the execution module 112 adjusts a resource used for the service of the user, to provide a latency assurance cloud service for the user.

Alternatively, the obtaining module 111, the execution module 112, the monitoring module 113, the collection module 114, the control module 115, and the storage module 116 may all be deployed in the operation and maintenance management area of the cloud platform. In this case, the plurality of modules may cooperate to provide latency assurance for the service of the user.

Alternatively, the obtaining module 111, the execution module 112, the monitoring module 113, the collection module 114, the control module 115, and the storage module 116 may all be deployed in the service area of the cloud platform. In this case, in a possible implementation, the plurality of modules may cooperate or the obtaining module 111 and the execution module 112 may cooperate to provide a latency assurance cloud service for the user. In another possible implementation, the obtaining module 111, the monitoring module 113, the collection module 114, the control module 115, and the storage module 116 may cooperate to provide a cloud service of collecting the latency information for the user.

It should be understood that, which modules in the latency assurance system 11 are specifically deployed in a specific environment is not limited in this application. In actual application, adaptive deployment can be performed based on an occupation status of a resource on the cloud platform or a specific application requirement.

The following describes an implementation process of a latency assurance method provided in the embodiments of this application. For the purpose of convenient and brief description, for a specific working process of each module in the latency assurance system, refer to a corresponding process in the latency assurance method.

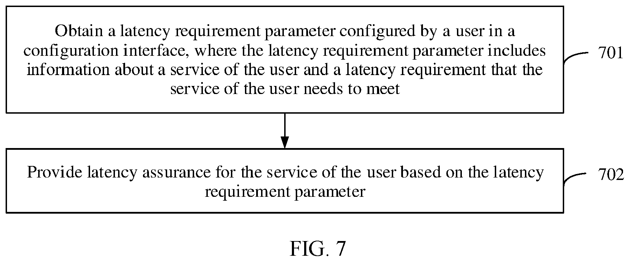

FIG. 7 is a flowchart of a latency assurance method according to an embodiment of this application. The latency assurance method is applied to a cloud platform. As shown in FIG. 7, the latency assurance method may include the following steps.

Step 701: Obtain a latency requirement parameter configured by a user in a configuration interface, where the latency requirement parameter includes information about a service of the user and a latency requirement that the service of the user needs to meet.

There may be a plurality of implementations in which the cloud platform obtains the latency requirement parameter. In a possible implementation, the configuration interface may be a graphical user interface (graphical user interface, GUI). For example, the cloud platform may provide the graphical user interface for the user. The user may log on to the graphical user interface on a terminal device, and configure the latency requirement parameter for the service of the user in the graphical user interface. The terminal device may send the latency requirement parameter configured by the user to an obtaining module 111, so that the obtaining module 111 obtains the latency requirement parameter configured by the user in the graphical user interface.

In another possible implementation, an obtaining module 111 may obtain, in a transmission manner, for example, through an application programming interface (application programming interface, API), the latency requirement parameter configured by the user. For example, another module on a cloud platform 1 may obtain, in advance, the latency requirement parameter configured by the user in the configuration interface, and the obtaining module 111 may receive, in a transmission manner, for example, through an API, the latency requirement parameter sent by the another module. The another module may be a module other than the obtaining module on the cloud platform or a latency assurance system.

Step 702: Provide latency assurance for the service of the user based on the latency requirement parameter.

Optionally, a latency assurance cloud service may be an independent cloud service among cloud services provided by the cloud platform. In other words, the user can purchase the latency assurance cloud service as an independent service. Alternatively, the latency assurance cloud service and the service created for the user according to a service requirement of the user may be integrated into one cloud service that provides the service. Creating the service for the user according to the service requirement of the user is a basic function of the cloud service that provides the service, and the latency assurance cloud service is an optional function of the cloud service that provides the service. That is, after purchasing the cloud service that provides the service, the user needs to select to enable the basic function of creating the service for the user according to the service requirement of the user, and may select, according to a requirement of the user, whether to enable the latency assurance cloud service.

In addition, there may be at least two cases in which latency assurance is provided for the service of the user based on the latency requirement parameter.

In a first case, when applying for the service on the cloud platform, the user also applies for the latency assurance cloud service related to the service, and indicates to configure a resource for the service of the user based on the latency assurance cloud service. The cloud platform may generate, based on the latency requirement parameter and a specified formulation policy, a latency assurance policy used to implement the latency assurance cloud service. Before providing the service of the user, the cloud platform performs resource configuration for the service of the user according to the latency assurance policy, and implements the latency assurance service based on the resource configuration.

For example, it is assumed that the latency requirement parameter includes: Identifier information of the service of the user for which latency assurance needs to be provided is abcdefghi, service objects implementing the service are a virtual machine 1 and a virtual machine 2, and a latency upper limit that the service needs to meet is 1 ms. The latency assurance policy generated based on the latency requirement parameter is as follows: The virtual machine 1 and the virtual machine 2 each use two CPUs including four cores and a 256-gigabit memory, a bandwidth limit for a port of the virtual machine 1 is C1 Mbps, and a bandwidth limit for a port of the virtual machine 2 is C2 Mbps. The cloud platform may perform, according to the latency assurance policy, resource configuration for the service whose identifier information is abcdefghi, and may perform configuration that the virtual machine 1 and the virtual machine 2 each use the two CPUs including the four cores and the 256-gigabit memory, the bandwidth limit for the port of the virtual machine 1 is C1 Mbps, and the bandwidth limit for the port of the virtual machine 2 is C2 Mbps, to provide the service based on the configuration, and to ensure that the service latency does not exceed 1 ms.

In a second case, after the user applies for the service on the cloud platform (for example, a virtual machine, a container, or another software application), and the user further applies for the latency assurance cloud service related to the service after the service of the user runs (or when the user applies for both the service and the latency assurance cloud service on the cloud platform), when the user indicates to adjust a resource configuration in an implementation process of the service of the user based on the latency assurance cloud service, the cloud platform may first provide the cloud service based on an initial configuration of a basic resource required for completing the service, and monitor an actual latency of the service in real time in the service implementation process. When the actual latency of the service does not meet the latency requirement, the cloud platform provides latency assurance for the service, so that the actual latency of the service meets the latency requirement to the greatest extent.

Optionally, when the actual latency of the service of the user does not meet the latency requirement, the providing latency assurance for the service may include: generating, based on the actual latency of the service of the user and the latency requirement parameter of the service, the latency assurance policy used to provide latency assurance for the service, and adjusting, according to the latency assurance policy, the basic resource used for the service. In addition, the cloud platform may obtain latency information of the service of the user, and determine, based on the latency information, whether the actual latency of the service of the user meets the latency requirement. The latency information is used to reflect the actual latency of the service of the user.

In an implementation scenario of the second case, before obtaining the latency requirement parameter configured by the user in the configuration interface, the cloud platform may obtain the service requirement sent by the user, create the service of the user based on the service requirement of the user, and complete creation of the service of the user before obtaining the latency requirement parameter.

For example, it is assumed that the service requirement of the user obtained by the cloud platform is to create a service whose identifier information is abcdefghi. The cloud platform determines, according to the service requirement of the user, that a configuration (namely, the initial configuration of the service) required for implementing the service is as follows: The service whose identifier information is abcdefghi is implemented by using a virtual machine 1 and a virtual machine 2, the virtual machine 1 uses two CPUs including four cores and a 256-gigabit memory, the virtual machine 2 uses two CPUs including three cores and a 256-gigabit memory, a bandwidth limit for a port of the virtual machine 1 is C3 Mbps, and a bandwidth limit for a port of the virtual machine 2 is C2 Mbps. In this case, the cloud platform may create, according to the service requirement and the foregoing initial configuration, the service whose identifier information is abcdefghi.

In addition, the user also applies for the latency assurance cloud service related to the service after the service runs, and the latency requirement parameter required by the latency assurance cloud service is that a latency upper limit of the service is 1 ms. When the cloud platform detects, in the service implementation process, that the actual latency of the service is greater than 1 ms, the cloud platform generates, based on the actual latency of the service and the latency requirement parameter, a latency assurance policy used to provide latency assurance for the service. The latency assurance policy is as follows: A virtual machine 1 and a virtual machine 2 each use two CPUs including four cores and a 256-gigabit memory, a bandwidth limit for a port of the virtual machine 1 is C1 Mbps, and a bandwidth limit for a port of the virtual machine 2 is C2 Mbps. In this case, the cloud platform may adjust a resource configuration of the service according to the latency assurance policy, that is, adjust a configuration of the virtual machine 2 to using two CPUs including four cores and a 256-gigabit memory, and adjust a bandwidth limit for the port of the virtual machine 1 to C1 Mbps, to provide latency assurance that a latency does not exceed 1 ms for the service of the user based on the adjusted resource configuration.

It can be learned from the foregoing that, in the latency assurance method provided in this embodiment of this application, the latency requirement parameter configured by the user in the configuration interface is obtained, and latency assurance is provided for the service of the user based on the latency requirement parameter. In this way, latency assurance can be provided for the service of the user, and user experience can be improved.

It should be noted that the latency requirement parameter that is configured by the user in the configuration interface and that is obtained in the step 701 may include the information about the service of the user and the latency requirement that the service of the user needs to meet. The information about the service of the user may include one or more of the following information: identifier information of the service of the user, location information of the service of the user, identifier information of a service object implementing the service of the user, and location information of the service object implementing the service of the user. The service object is a bearer used to implement the service. For example, the service object may be a virtual machine, a container, a bare metal server, or the like used to implement the service. It should be understood that a service object for implementing a service may be one or more service objects. The latency requirement that the service needs to meet includes a latency upper limit that the service needs to meet. The latency upper limit that the service needs to meet is used to indicate a maximum latency that can be tolerated for the service.

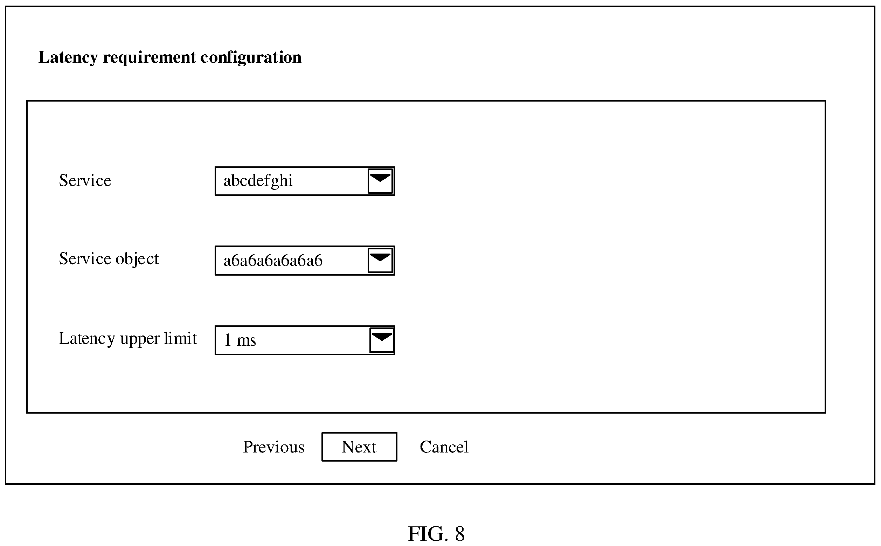

For example, it is assumed that the latency requirement parameter includes: Identifier information of the service that is configured by the user and for which latency assurance needs to be implemented is abcdefghi; a service object implementing the service of the user is a virtual machine 1, where the virtual machine 1 is configured to process data related to the service of the user, and the identifier information of the virtual machine 1 is a6a6a6a6a6a6; and a latency upper limit that the service of the user needs to meet is 1 ms. FIG. 8 is a schematic diagram of a configuration interface according to an embodiment of this application. As shown in FIG. 8, the configuration interface includes the following configuration options: "Service", "Service object", and "Latency upper limit". After logging on to the configuration interface, the user may enter "abcdefghi" in the "Service" configuration option as the identifier information of the service for which latency assurance needs to be provided, enter "a6a6a6a6a6a6" in the "Service object" configuration option, and enter "1 ms" in the "Latency upper limit" configuration option as a latency upper limit that the service needs to meet.

Further, personalized customization may be performed on the latency assurance cloud service. This further improves quality of service. Correspondingly, the latency requirement parameter may further include an optional parameter used to implement personalized customization. For example, the latency requirement parameter may further include one or more of the following information: information about a resource used to provide latency assurance, information about time used to provide latency assurance, forcible information for providing latency assurance, a collection period of latency information of the service of the user, and a preference formulation policy used to provide latency assurance.

The information about the resource used to provide latency assurance is used to indicate the resource used to provide latency assurance. For example, the information about the resource used to provide latency assurance may indicate that a maximum of two CPUs including four cores and a 256-gigabit (GB) memory are used to provide latency assurance.

The information about the time used to provide latency assurance is used to indicate a time period in which latency assurance needs to be provided. For example, the information about the time used to provide latency assurance may indicate that latency assurance is provided from 5 p.m. to 8 p.m. every day.

The forcible information for providing latency assurance is used to indicate whether to strictly meet a requirement of providing latency assurance on a premise of a basic resource currently purchased by the user. When the user purchases a different basic resource, a smallest latency of a service implemented by using the different basic resource is also different. For example, when the user purchases a first-level basic resource, a smallest latency of a service implemented by using the first-level basic resource is 5 ms; when the user purchases a second-level basic resource, a smallest latency of a service implemented by using the second-level basic resource is 3 ms; and when the user purchases a third-level basic resource, a smallest latency of a service implemented by using the third-level basic resource is 1 ms. Therefore, if the user selects "Yes" in "Forcible information" in the interface and a smallest latency that can be reached by using the basic resource currently purchased by the user is still higher than the latency upper limit set by the user, a latency assurance system automatically adjusts, for the user, another basic resource that can meet the latency requirement, to meet the latency requirement provided by the user. For example, a type of the basic resource used for the service may be modified, and basic resources such as a CPU, a memory, and a kernel that implement the service may be added. In this case, the user needs to additionally purchase a basic resource, which increases implementation costs of the service of the user, but the latency of the service of the user can be effectively ensured. If latency assurance is not forcibly provided, that is, when the user selects "No" in "Forcible information" in the interface, the latency assurance system provides latency assurance to the greatest extent based on the basic resource originally purchased by the user. In this case, the user does not need to additionally purchase a basic resource, and the cloud platform can ensure a latency of the service of the user to the greatest extent based on the existing basic resource. It should be understood that when the user selects "No" in "Forcible information", there may be a case that the latency of the service for which latency assurance needs to be implemented may fail to reach the latency upper limit configured by the user.

The preference formulation policy used to provide latency assurance is used to indicate a formulation policy used for the latency assurance policy formulated based on the latency requirement parameter and used to provide latency assurance. Because a latency assurance policy formulated according to a different formulation policy has a different service focus, the user may select a corresponding formulation policy based on a focus concerned by the user. Correspondingly, the cloud platform may generate, according to the formulation policy selected by the user, a latency assurance policy used to implement the assurance service. For example, a formulation policy 1 focuses on costs control on a premise of ensuring a latency, whereas a formulation policy 2 focuses on a latency. Therefore, if the user focuses on the costs control on a premise of ensuring a lowest latency, the user may select the formulation policy 1 as a formulation policy corresponding to the latency assurance policy used to provide the latency assurance cloud service for the user. If the user focuses on a lowest latency, the user may select the formulation policy 2 as a formulation policy corresponding to the latency assurance policy used to provide the latency assurance cloud service for the user.

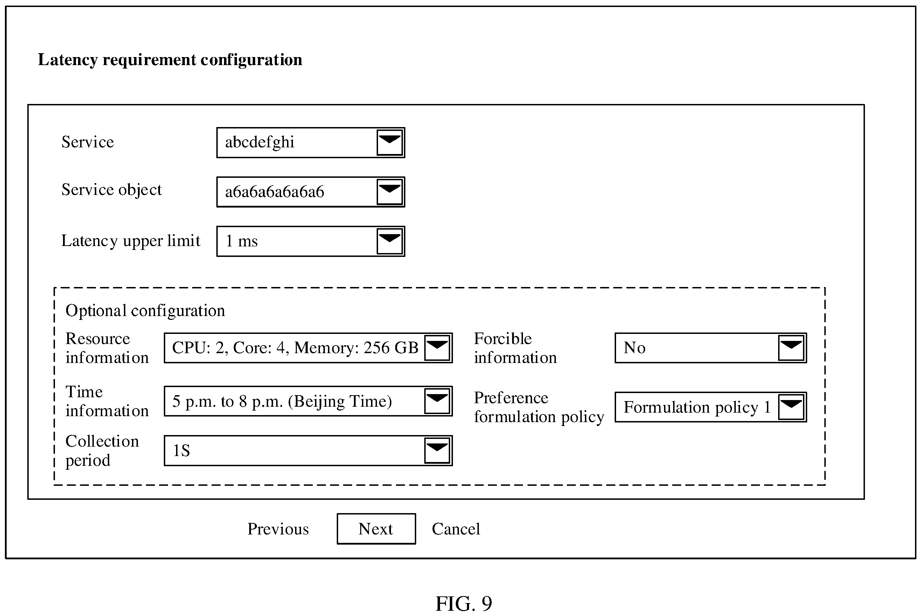

For example, based on the foregoing example of the latency requirement parameter, it is assumed that the latency requirement parameter further includes the following information: The information about the resource used to provide latency assurance indicates that a maximum of two CPUs including four cores and a 256-gigabit memory are used to provide latency assurance for the service of the user; the information about the time used to provide latency assurance indicates that latency assurance is provided from 5:00 p.m. to 8:00 p.m. (Beijing Time) every day; the forcible information for providing latency assurance indicates that a requirement of providing latency assurance is not strictly met; the preference formulation policy used to provide latency assurance indicates that the formulation policy 1 is used to generate, based on the latency requirement parameter, the latency assurance policy used to provide latency assurance; and the collection period of the latency information of the service is 1 second (s). FIG. 9 is a schematic diagram of another configuration interface according to an embodiment of this application. As shown in FIG. 9, the configuration interface further includes the following configuration options: "Resource information", "Time information", "Forcible information", "Preference formulation policy", and "Collection period". After logging on to the configuration interface, the user may enter "CPU: 2, Core: 4, Memory: 256 gigabits" in the "Resource information" configuration option, enter "5:00 p.m. to 8:00 p.m. (Beijing Time)" in the "Time information" configuration option, enter "No" in the "Forcible information" configuration option, enter "Formulation policy 1" in the "Preference formulation policy" configuration option, and enter "IS" in the "Collection period" configuration option.

Optionally, when the latency requirement parameter is transmitted in a transmission manner, for example, through an API, the latency requirement parameter may be carried in a JS object notation (javascript object notation, JSON) file for transmission. The following provides an example of a JSON file carrying the latency requirement parameter, where content following each line of instruction "//" is a comment on the line of instruction.

```
           {
               "force trigger": false, // Forcible information for
 providing latency assurance is "No"
               "tenant_uuid": "76fddfee-a9c4-40b0-8da0-c19ad6904f09",
 // A universally unique identifier
 (universally unique identifier, UUID) of a tenant who applies for the
 latency assurance service is 76fddfee-a9c4-40b0-
 8da0-c19ad6904f09
               "name": "test_definition", // A name of the latency
 assurance service is test_definition
               "content": {//Content of latency assurance
                    "latency": [// Content of latency assurance is a latency
                         "5"// An upper limit of the latency is 5 ms ]
                    "object": [// Object implementing latency assurance
                         "VM1, VM2" //Objects implementing latency
assurance are a virtual machine 1 and a
                         virtual machine 2
                    ] },
               "definition_type": "VM2VM", // A type of latency assurance
is a latency between the virtual machine
 1 and the virtual machine 2
               "start_time": "2020-04-02 20:30:00", // Start time of
latency assurance is 2020-04-02 20:30:00
               "end_time": "2018-04-04 20:30:00", //End time of
latency assurance is 2018-04-04 20:30:00
               "extra": {//Reserved field
               } }
```

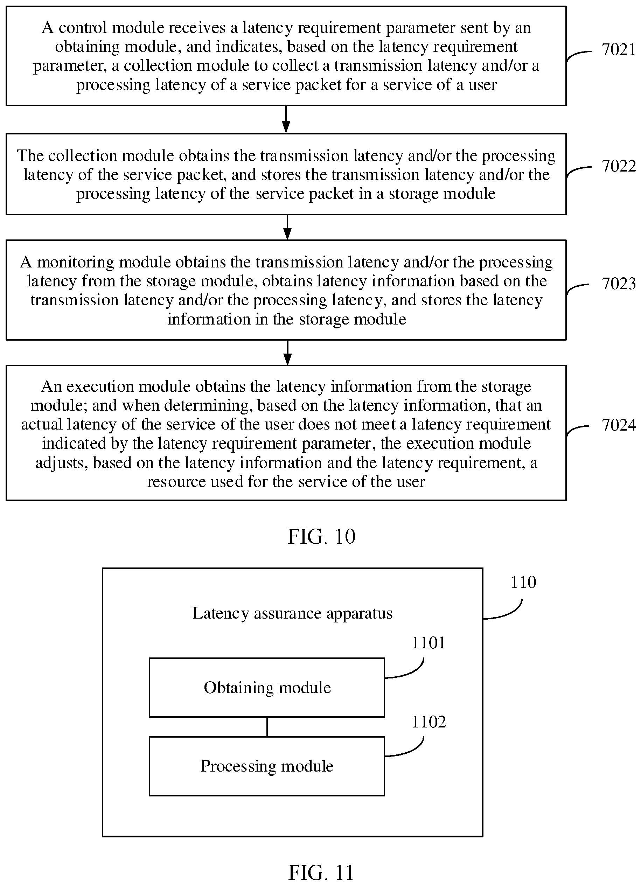

As described above, there may be two cases in which latency assurance is provided for the service of the user based on the latency requirement parameter in step 702. The following describes an implementation process of the second case in step 702 by using an example in which the latency collection system shown in FIG. 4 implements the latency assurance method provided in the embodiments of this application. As shown in FIG. 10, the implementation process includes the following steps.

Step 7021: A control module receives a latency requirement parameter sent by an obtaining module, and indicates, based on the latency requirement parameter, a collection module to collect a transmission latency and/or a processing latency of a service packet for a service of a user.

The latency requirement parameter includes information about the service of the user and a latency requirement that the service needs to meet. The control module may indicate, based on the latency requirement parameter, the collection module to collect the transmission latency and/or the processing latency of the service packet that is used to transmit the service between service objects implementing the service. That is, the control module is configured to notify the collection module of a collection object and a collection requirement corresponding to the transmission latency and/or the processing latency. In addition, a latency assurance system generally includes a plurality of collection modules. For a service, the control module may indicate some or all of the plurality of collection modules to collect the transmission latency and/or the processing latency of the service packet for the service. For example, the latency requirement parameter includes: Identifier information of the service for which latency assurance needs to be provided is abcdefghi, and service objects implementing the service are a virtual machine 1 and a virtual machine 2. In this case, the control module may indicate the collection module to collect the transmission latency and/or the processing latency of the service packet transmitted between the virtual machine 1 and the virtual machine 2 for the service whose identifier information is abcdefghi.

In addition, when the latency requirement parameter further includes information about time used to provide latency assurance, the control module may indicate the collection module to collect the transmission latency and/or the processing latency of the service packet in a time period indicated by the time information. For example, when the time information indicates that latency assurance is provided from 5:00 p.m. to 8:00 p.m. every day, the control module may indicate the collection module to collect the transmission latency and/or the processing latency of the service packet from 5:00 p.m. to 8:00 p.m. every day.

Further, when the latency requirement parameter further includes a collection period of latency information of the service of the user, the control module may further generate a collection policy based on the collection period, and send the collection policy to the collection module, to indicate the collection module to obtain the transmission latency and/or the processing latency according to the collection policy. For example, when the latency requirement parameter indicates that a latency between a virtual machine 1 and a virtual machine 2 is not greater than 1 ms, and the collection period of the latency information is 1 second, the control module may generate, based on the latency requirement parameter, the collection policy that information about the latency between the virtual machine 1 to the virtual machine 2 is collected once every second, and send the collection policy to the collection module, to indicate the collection module to obtain the transmission latency and/or the processing latency according to the collection policy.

Step 7022: The collection module obtains the transmission latency and/or the processing latency of the service packet, and stores the transmission latency and/or the processing latency of the service packet in a storage module.

Optionally, the transmission latency may be a transmission latency of the service packet between the service objects implementing the service of the user, or the transmission latency may be determined based on an arrival timestamp of the service packet arriving at the collection module. The processing latency may be determined based on duration that is consumed when the service packet passes through each network element.

In addition, the collection module may obtain the transmission latency and/or the processing latency of the service packet in a plurality of implementations. The following uses an example in which the collection module obtains the transmission latency and/or the processing latency of the service packet by using a network element configured to transmit the service packet to describe implementations of the collection module.

In a first possible implementation, the collection module collects the transmission latency of the service packet between the service objects implementing the service of the user. In this case, one of the service objects may construct a probe packet, and transmit the probe packet to the other service object. Then, a collection module closest to the other service object obtains a transmission latency of transmitting the probe packet from the service object to the collection module, and determines the transmission latency as the transmission latency of the service packet between the two service objects. The probe packet and the service packet may have same 5-tuple information, and the probe packet and the service packet are transmitted through a same link, to ensure accuracy of the determined transmission latency. It should be noted that the collection module configured to obtain the transmission latency of transmitting the probe packet from the service object to the collection module may be adjusted according to an application requirement. This is not specifically limited in this embodiment of this application.

In a second possible implementation, the collection module collects the transmission latency of the service packet between the service objects implementing the service of the user, and the service packet may carry round trip time (round trip time, RTT) when the service packet is transmitted through a transmission control protocol (transmission control protocol, TCP) connection between the two service objects. In this case, any collection module in the latency assurance system may capture the service packet, extract the round trip time carried in the service packet, and then determine the transmission latency based on the round trip time. It should be noted that after obtaining the round trip time, the collection module may directly store the round trip time in the storage module.

In a third possible implementation, the collection module collects the transmission latency of the service packet between the service objects implementing the service of the user, and determines the transmission latency based on the arrival timestamp of the service packet arriving at the collection module. In this case, after the service packet arrives at each collection module in the latency assurance system, the collection module may add, to the service packet, a timestamp at which the service packet arrives. Then, a collection module closest to a service object serving as a receive end obtains a timestamp in the service packet, and determines the transmission latency of the service packet based on the timestamp. It should be noted that, after obtaining the timestamp, the collection module may directly store the timestamp in the storage module, and the collection module configured to obtain the service packet may be further adjusted according to an application requirement. This is not specifically limited in this embodiment of this application.

In a fourth possible implementation, the collection module collects the processing latency of the service packet, and determines the processing latency based on duration that is consumed when the service packet passes through each network element. In this case, after the service packet arrives at each collection module in the latency assurance system, the collection module may add duration that is consumed when the service packet passes through the collection module (for ease of description, the duration is referred to as consumed duration below). Then, a collection module closest to a service object serving as a receive end obtains consumed duration added by each collection module to the service packet, and determines the processing latency of the service packet based on the consumed duration. It should be noted that, after obtaining the consumed duration, the collection module may directly store the consumed duration in the storage module, and the collection module configured to obtain the service packet may be further adjusted according to an application requirement. This is not specifically limited in this embodiment of this application.

It should be noted that, after obtaining the transmission latency and/or the processing latency of the service packet, the collection module may directly store the transmission latency and/or the processing latency in the storage module; or the collection module may periodically store the transmission latency and/or the processing latency in the storage module. In addition, after storing the transmission latency and/or the processing latency in the storage module, the collection module may further send, to a monitoring module, a message used to indicate that the transmission latency and/or the processing latency have/has been stored in the storage module, so that the monitoring module can obtain the transmission latency and/or the processing latency in time.

Step 7023: The monitoring module obtains the transmission latency and/or the processing latency from the storage module, obtains latency information based on the transmission latency and/or the processing latency, and stores the latency information in the storage module.

Optionally, the latency information obtained by the monitoring module may include any one of the following: the transmission latency and/or the processing latency of the service packet, an actual latency of the service packet determined based on the transmission latency and/or the processing latency, and information about a latency difference between the actual latency and the latency requirement determined based on the actual latency and the latency requirement.

When the latency information is the actual latency of the service packet determined based on the transmission latency and/or the processing latency, the monitoring module may calculate the actual latency based on the transmission latency and/or the processing latency after obtaining the transmission latency and/or the processing latency. When the latency information is the information about the latency difference, after obtaining the transmission latency and/or the processing latency, the monitoring module may calculate the actual latency based on the transmission latency and/or the processing latency, and calculate the information about the latency difference based on the actual latency and the latency requirement parameter.

Step 7024: An execution module obtains the latency information from the storage module; and when determining, based on the latency information, that the actual latency of the service of the user does not meet the latency requirement indicated by the latency requirement parameter, the execution module adjusts, based on the latency information and the latency requirement, a resource used for the service of the user.

After determining, based on the latency information and the latency requirement parameter, that the actual latency of the service of the user does not meet the latency requirement indicated by the latency requirement parameter, the execution module may first generate an adjustment policy for adjusting the resource used for the service of the user, and adjusts, according to the adjustment policy, the resource used for the service of the user.

In addition, when determining, based on the latency information, whether the actual latency meets the latency requirement, the execution module may separately determine whether a plurality of actual latencies within preset duration meet the latency requirement to avoid a misjudgment. When none of the plurality of actual latencies meets the latency requirement, or a total quantity of actual latencies that are in the plurality of actual latencies and that do not meet the latency requirement is greater than or equal to a predetermined quantity threshold, the execution module determines that the actual latency of the service of the user does not meet the latency requirement. In this case, the execution module may adjust, based on the latency information and the latency requirement, the resource used for the service of the user.

The execution module may pre-store a plurality of formulation policies, and the plurality of formulation policies are all used to generate latency assurance policies for adjusting the resource used for the service of the user. In addition, when the latency requirement parameter further includes a preference formulation policy used for formulating a latency assurance policy, the execution module may select, from the plurality of pre-stored formulation policies, a formulation policy that meets the preference formulation policy, and generate a latency assurance policy by using the formulation policy that meets the preference formulation policy.

In an implementation, when generating the latency assurance policy, the execution module may separately generate the latency assurance policies by using the plurality of formulation policies, simulate resource adjustment according to the plurality of generated latency assurance policies, obtain a yield obtained after resource adjustment according to each latency assurance policy, and determine a latency assurance policy according to which a highest yield is achieved as a latency assurance policy that is used to actually adjust the resource for the service of the user. Even, based on resource adjustment according to each latency assurance policy, the execution module may further calculate costs for implementing the service of the user, and determine, based on yields and the costs, a latency assurance policy according to which a highest yield is achieved at lowest costs as a latency assurance policy that is used to actually adjust the resource of the service of the user. Input of the formulation policy may include information about the service of the user, a latency upper limit that the service of the user needs to meet, and an actual latency of the service of the user within specified duration. Output of the formulation policy may include a manner of adjusting the resource used for the service of the user, for example, a manner of reserving a network resource, or a flow control operation list of the service of the user.

Optionally, a resource object that is used for the service and that is to be adjusted may include one or more of the following: a network resource, a computing resource, and a storage resource used for the service. In addition, the manner of adjusting the resource used for the service includes one or more of the following: reserving the resource for the service of the user, and adjusting a restriction of the resource that can be used for the service of the user. The adjusting the restriction of the resource that can be used for the service of the user may include one or more of the following manners: adjusting a bandwidth limit for a port of a service object implementing the service of the user, adjusting a quality of service (quality of service, QoS) policy for the port of the service object implementing the service of the user, adjusting a priority of traffic used for the service of the user, adjusting a multi-queue configuration of a network adapter used to transmit the service packet for the service of the user, and adjusting a deployment location of the service object implementing the service of the user (for example, migrating a virtual machine 1 and a virtual machine 2 to a same host).

It should be noted that the execution module may actively obtain the latency information from the storage module. For example, when the execution module needs to obtain the latency information, the execution module may send a latency information obtaining request to the storage module, so that the storage module sends the latency information to the execution module based on the latency information obtaining request. Alternatively, the execution module may passively obtain the latency information. For example, the storage module may actively send the latency information to the execution module according to a preset policy. The preset policy may indicate the storage module to periodically send the latency information to the execution module, or the preset policy may indicate the storage module to send the latency information to the execution module when the latency information stored in the storage module is updated. This is not specifically limited in this embodiment of this application.

In conclusion, in the latency assurance method provided in this embodiment of this application, latency assurance is performed for the service deployed for the user on the cloud platform, to improve user experience.

It should be noted that, a sequence of the steps of the latency assurance method provided in this embodiment of this application may be appropriately adjusted, and a step may be added or removed based on a situation. Any variation readily figured out by a person skilled in the art within the technical scope disclosed in this application shall fall within the protection scope of this application. Therefore, details are not described herein.

This application provides a latency assurance apparatus, and the latency assurance apparatus may be deployed on a cloud platform. As shown in FIG. 11, the latency assurance apparatus 110 may include:
an obtaining module 1101, configured to obtain a latency requirement parameter configured by a user in a configuration interface, where the latency requirement parameter includes information about a service of the user and a latency requirement that the service of the user needs to meet; and
a processing module 1102, configured to provide latency assurance for the service of the user based on the latency requirement parameter.

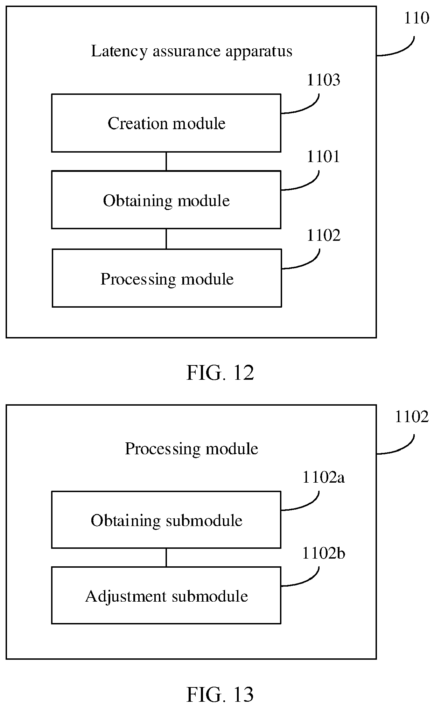

Optionally, as shown in FIG. 12, the latency assurance apparatus 110 may further include:
a creation module 1103, configured to create the service of the user based on a service requirement of the user, and complete creation of the service of the user before the latency requirement parameter is obtained.

Optionally, the latency requirement parameter may further include one or more of the following information: information about a resource used to provide latency assurance, information about time used to provide latency assurance, forcible information for providing latency assurance, a preference formulation policy used to provide latency assurance, and a collection period of latency information of the service of the user.

Optionally, as shown in FIG. 13, the processing module 1102 includes:
an obtaining submodule 1102a, configured to obtain latency information of the service of the user, where the latency information is used to reflect an actual latency of the service of the user; and
an adjustment submodule 1102b, configured to: when the actual latency determined based on the latency information does not meet the latency requirement, adjust, based on the latency information and the latency requirement, a resource used for the service of the user.

Optionally, the adjustment submodule 1102b is specifically configured to: adjust one or more of a network resource, a computing resource, and a storage resource used for the service of the user.

Optionally, the adjustment submodule 1102b is specifically configured to: reserve the resource for the service of the user; or adjust a restriction of the resource that can be used for the service of the user.

Optionally, the adjusting the restriction of the resource that can be used for the service of the user includes one or more of the following manners: adjusting a bandwidth limit for a port of a service object implementing the service of the user, adjusting a quality service policy for the port of the service object, adjusting a priority of traffic used for the service of the user, adjusting a multi-queue configuration of a network adapter used to transmit a service packet for the service of the user, or adjusting a deployment location of the service object.

Optionally, the obtaining submodule 1102a is specifically configured to: obtain a transmission latency and/or a processing latency of the service packet for the service of the user; and obtain the latency information based on the transmission latency and/or the processing latency.

In conclusion, in the latency assurance apparatus provided in this embodiment of this application, the obtaining module obtains the latency requirement parameter configured by the user in the configuration interface, and the processing module provides latency assurance for the service of the user based on the latency requirement parameter. In this way, latency assurance can be provided for the service of the user, and user experience can be improved.

It may be clearly understood by a person skilled in the art that, for the purpose of convenient and brief description, for a detailed working process of the foregoing described latency assurance system, latency assurance apparatus, and modules, reference may be made to a corresponding process in the foregoing method embodiment. Details are not described herein again.

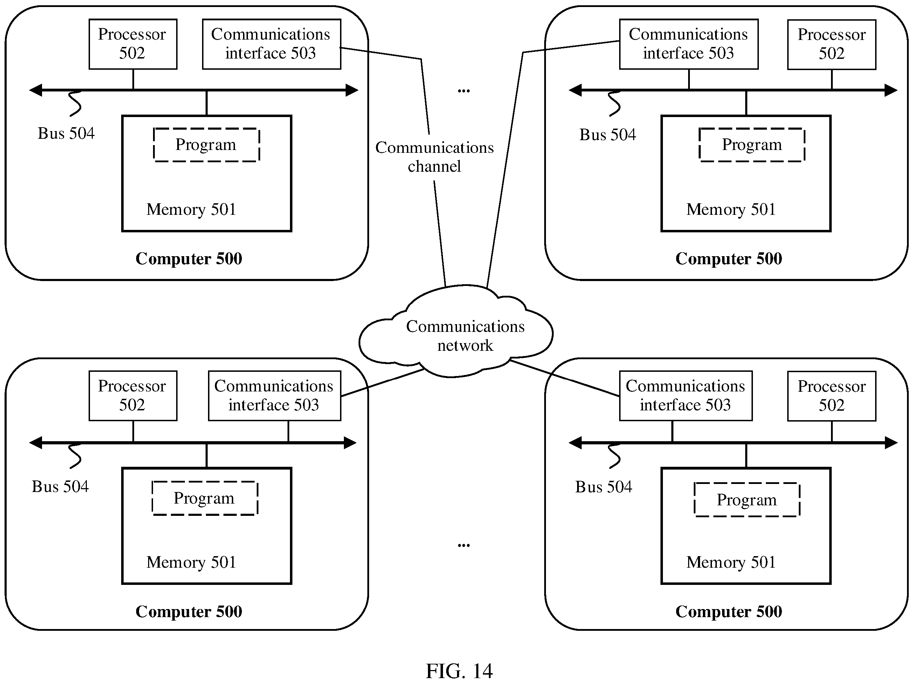

Modules in the latency assurance system provided in the embodiments of this application may be deployed in a distributed manner on a plurality of computers in a same environment or different environments. Therefore, an embodiment of this application further provides a computing device. The computing device may be a computer system, including one or more computers 500. For example, as shown in FIG. 14, each computer 500 includes a memory 501, a processor 502, a communications interface 503, and a bus 504. The memory 501, the processor 502, and the communications interface 503 are communicatively connected to each other through the bus 504.

The memory 501 may be a read-only memory (Read-Only Memory, ROM), a static storage device, a dynamic storage device, or a random access memory (Random Access Memory, RAM). The memory 501 may store a program. When the program stored in the memory 501 is executed by the processor 502, the processor 502 and the communications interface 503 are configured to perform the latency assurance method in the embodiments of this application. The memory 501 may further include another software module, such as an operating system, or data for running a process. The operating system may be Linux^{™}, Unix^{™}, Windows^{™}, or the like.

The processor 502 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits.

Alternatively, the processor 502 may be an integrated circuit chip and has a signal processing capability. In an implementation process, some or all functions of the latency assurance system in this application may be accomplished by using an integrated logic circuit of hardware in the processor 502 or instructions in a form of software. The processor 502 may be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor 502 may implement or perform the methods, the steps, and the logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 501. The processor 502 reads information in the memory 501, and accomplishes some functions of the latency assurance system in the embodiments of this application in combination with hardware of the processor 502.

The communications interface 503 is but not limited to a transceiver module, for example, a transceiver, to implement communication between the computer 500 and another device or a communications network.

The bus 504 may include a channel for transmitting information between components (for example, the memory 501, the processor 502, and the communications interface 503) of the computer 500.

A communications channel is established between the computers 500 by using a communications network. Each computer 500 is configured to perform some functions of the latency assurance system. Any computer 500 may be a computer (for example, a server) in a cloud data center, or a computer in an edge data center.

The foregoing descriptions of the procedures corresponding to the accompanying drawings have respective focuses. For a part that is not described in detail in a procedure, refer to a related description of another procedure.

All or some of the foregoing embodiments may be implemented by using software, hardware, firmware, or any combination thereof. When software is used to implement the embodiments, all or some of the embodiments may be implemented in a form of a computer program product. A computer program product that provides a latency assurance cloud service includes one or more computer instructions. When the computer program instructions are loaded and executed on a computer, all or some of the procedures or functions are generated according to FIG. 7 or FIG. 10 in the embodiments of this application.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide the latency assurance cloud service.

This application further provides a computer-readable storage medium. The computer-readable storage medium may be a non-transitory readable storage medium. When instructions in the computer-readable storage medium are executed by a computer, the computer is configured to perform the latency assurance method provided in this application. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium (for example, an SSD).

This application further provides a computer program product. The computer program product includes computer instructions. When the computer program product is executed by a computing device, the computing device performs the latency assurance method provided in the embodiments of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In the embodiments of this application, the terms "first", "second", and "third" are merely used for a purpose of description, and shall not be understood as an indication or implication of relative importance. Unless otherwise explicitly limited, the term "one or more" refers to one or more, and the term "a plurality" refers to two or more.

The term "and/or" in this application describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, or improvement made without departing from the concept and principle of this application should fall within the protection scope of this application.

## Claims

1. A latency assurance method, wherein the method is applied to a cloud platform, the cloud platform comprises a service provision system and a latency assurance system, the service provision system comprises a service created for a user according to a service requirement of the user, the latency assurance system is configured to provide a latency assurance cloud service for the user, the latency assurance cloud service is used to provide latency assurance for the service of the user in the service provision system, and the method comprises:
obtaining, by the latency assurance system, a latency requirement parameter configured by the user in a configuration interface, wherein the latency requirement parameter comprises information about the service of the user and a latency requirement that the service of the user needs to meet;
determining, by the latency assurance system based on the information about the service of the user, the service of the user in the service provision system; and
providing, by the latency assurance system, latency assurance for the service of the user according to the latency requirement that the service of the user needs to meet.

2. The method according to claim 1, wherein the latency requirement parameter further comprises one or more of the following information: information about a resource used to provide latency assurance, information about time used to provide latency assurance, forcible information for providing latency assurance, a preference formulation policy used to provide latency assurance, and a collection period of latency information of the service of the user; and
the providing latency assurance for the service of the user comprises: providing latency assurance for the service of the user based on the latency requirement parameter.

3. The method according to claim 1 or 2, wherein the providing latency assurance for the service of the user according to the latency requirement that the service of the user needs to meet comprises:
obtaining latency information of the service of the user, wherein the latency information is used to reflect an actual latency of the service of the user; and
when the actual latency determined based on the latency information does not meet the latency requirement, adjusting, based on the latency information and the latency requirement, a resource used for the service of the user.

4. The method according to claim 3, wherein the adjusting a resource used for the service of the user comprises:
adjusting one or more of a network resource, a computing resource, and a storage resource used for the service of the user.

5. The method according to claim 3 or 4, wherein the adjusting a resource used for the service of the user comprises:
reserving the resource for the service of the user; or
adjusting a restriction of the resource that can be used for the service of the user.

6. A latency assurance method, wherein the method is applied to a cloud platform, and the method comprises:
obtaining a latency requirement parameter configured by a user in a configuration interface, wherein the latency requirement parameter comprises information about a service of the user and a latency requirement that the service of the user needs to meet; and
providing latency assurance for the service of the user based on the latency requirement parameter.

7. The method according to claim 6, wherein before the obtaining a latency requirement parameter configured by a user in a configuration interface, the method further comprises:
creating the service of the user based on a service requirement of the user, and completing creation of the service of the user before obtaining the latency requirement parameter.

8. The method according to claim 6 or 7, wherein the latency requirement parameter further comprises one or more of the following information: information about a resource used to provide latency assurance, information about time used to provide latency assurance, forcible information for providing latency assurance, a preference formulation policy used to provide latency assurance, and a collection period of latency information of the service of the user.

9. The method according to any one of claims 6 to 8, wherein the providing latency assurance for the service of the user based on the latency requirement parameter comprises:
obtaining latency information of the service of the user, wherein the latency information is used to reflect an actual latency of the service of the user; and
when the actual latency determined based on the latency information does not meet the latency requirement, adjusting, based on the latency information and the latency requirement, a resource used for the service of the user.

10. The method according to claim 9, wherein the adjusting a resource used for the service of the user comprises:
adjusting one or more of a network resource, a computing resource, and a storage resource used for the service of the user.

11. The method according to claim 9 or 10, wherein the adjusting a resource used for the service of the user comprises:
reserving the resource for the service of the user; or
adjusting a restriction of the resource that can be used for the service of the user.

12. A latency assurance system, wherein the latency assurance system is applied to a cloud platform, the cloud platform further comprises a service provision system, the service provision system comprises a service created for a user according to a service requirement of the user, the latency assurance system is configured to provide a latency assurance cloud service for the user, the latency assurance cloud service is used to provide latency assurance for the service of the user in the service provision system, and the latency assurance system comprises:
an obtaining module, configured to obtain a latency requirement parameter configured by the user in a configuration interface, wherein the latency requirement parameter comprises information about the service of the user and a latency requirement that the service of the user needs to meet; and
an execution module, configured to: determine, based on the information about the service of the user, the service of the user in the service provision system; and provide latency assurance for the service of the user according to the latency requirement that the service of the user needs to meet.

13. The latency assurance system according to claim 12, wherein the latency requirement parameter further comprises one or more of the following information: information about a resource used to provide latency assurance, information about time used to provide latency assurance, forcible information for providing latency assurance, a preference formulation policy used to provide latency assurance, and a collection period of latency information of the service of the user; and
the execution module is specifically configured to provide latency assurance for the service of the user based on the latency requirement parameter.

14. The latency assurance system according to claim 12 or 13, wherein the execution module is specifically configured to:
obtain latency information of the service of the user, wherein the latency information is used to reflect an actual latency of the service of the user; and
when the actual latency determined based on the latency information does not meet the latency requirement, adjust, based on the latency information and the latency requirement, a resource used for the service of the user.

15. The latency assurance system according to claim 14, wherein the execution module is specifically configured to:
adjust one or more of a network resource, a computing resource, and a storage resource used for the service of the user.

16. The latency assurance system according to claim 14 or 15, wherein the execution module is specifically configured to:
reserve the resource for the service of the user; or
adjust a restriction of the resource that can be used for the service of the user.

17. A latency assurance apparatus, wherein the apparatus is deployed on a cloud platform, and the apparatus comprises:
an obtaining module, configured to obtain a latency requirement parameter configured by a user in a configuration interface, wherein the latency requirement parameter comprises information about a service of the user and a latency requirement that the service of the user needs to meet; and
a processing module, configured to provide latency assurance for the service of the user based on the latency requirement parameter.

18. The apparatus according to claim 17, wherein the apparatus further comprises:
a creation module, configured to create the service of the user based on a service requirement of the user, and complete creation of the service of the user before the latency requirement parameter is obtained.

19. The apparatus according to claim 17 or 18, wherein the latency requirement parameter further comprises one or more of the following information: information about a resource used to provide latency assurance, information about time used to provide latency assurance, forcible information for providing latency assurance, a preference formulation policy used to provide latency assurance, and a collection period of latency information of the service of the user.

20. The apparatus according to any one of claims 17 to 19, wherein the processing module comprises:
an obtaining submodule, configured to obtain latency information of the service of the user, wherein the latency information is used to reflect an actual latency of the service of the user; and
an adjustment submodule, configured to: when the actual latency determined based on the latency information does not meet the latency requirement, adjust, based on the latency information and the latency requirement, a resource used for the service of the user.

21. The apparatus according to claim 20, wherein the adjustment submodule is specifically configured to:
adjust one or more of a network resource, a computing resource, and a storage resource used for the service of the user.

22. The apparatus according to claim 20 or 21, wherein the adjustment submodule is specifically configured to:
reserve the resource for the service of the user; or
adjust a restriction of the resource that can be used for the service of the user.

23. A computing device, wherein the computing device comprises a processor and a memory, wherein
the memory stores a computer program; and
when the processor executes the computer program, the computing device performs the method according to any one of claims 1 to 5, or performs the method according to any one of claims 6 to 11.

24. A computer-readable storage medium, comprising instructions, wherein when the instructions are executed by a computing device, the computing device performs the method according to any one of claims 1 to 5, or performs the method according to any one of claims 6 to 11.
